Europäisches Patentamt

European Patent Office

Office européen des brevets

(19)

(11) Veröffentlichungsnummer: **0 048 714 B1**

# (12) EUROPÄISCHE PATENTSCHRIFT

(45) Veröffentlichungstag der Patentschrift:
04.01.84

(21) Anmeldenummer: **81900268.4**

(22) Anmeldetag: **24.01.81**

(86) Internationale Anmeldenummer:
**PCT/DE 81/00022**

(87) Internationale Veröffentlichungsnummer:
**WO 81/02955 (15.10.81 Gazette 81/24)**

(51) Int. Cl.³: **H 01 S 3/23, H 01 S 3/045**

(54) **HYBRIDLASER.**

(30) Priorität: **05.04.80 DE 3013303**

(43) Veröffentlichungstag der Anmeldung:
**07.04.82 Patentblatt 82/14**

(45) Bekanntmachung des Hinweises auf die Patenterteilung:
**04.01.84 Patentblatt 84/1**

(84) Benannte Vertragsstaaten:
**FR GB NL SE**

(56) Entgegenhaltungen:
**EP - A - 0 001 032**
**US - A - 3 404 349**

**IEEE Journal of Quantum Electronics, Buch QE-14, Nr. 3, veröffentlicht im März 1978, (New York, US), J-L Lackambre u.a. "Frequency and Amplitude Characteristics of a High Repetition Rate Hybrid TEA-CO2 Laser", Seite 170**

(73) Patentinhaber: **ELTRO GmbH Gesellschaft für Strahlungstechnik, Kurpfalzring 106 Postfach 10 21 20, D-6900 Heidelberg 1 (DE)**

(72) Erfinder: **KARNING, Heinrich, Albert-Fritz-Strasse 6, D-6900 Heidelberg (DE)**
Erfinder: **PREIN, Franz, Tulpenweg 3, D-6901 Waldhilsbach (DE)**

(74) Vertreter: **Muschka, Wilhelm, i.Fa. Eltro Gmbh Kurpfalzring 106 Postfach 10 21 20, D-6900 Heidelberg 1 (DE)**

Hybridlaser

Die Erfindung bezieht sich auf einen Hybridlaser, bestehend aus einer ersten Lasereinheit, die ein Referenzlaser oder ein Injektionslaser oder ein Laser-Verstärker sein kann, und aus einer zweiten Lasereinheit, die ein TE-Laser oder ein longitudinal gepulster oder gütegeschalteter CW-Laser sein kann, bei dem beide Lasereinheiten in einem gemeinsamen Gehäuse und in einem gemeinsamen Resonatorraum zueinander parallel verlaufend angeordnet sind und mit gleicher oder unterschiedlicher Wellenlänge arbeiten, wobei ihre Entladungskanäle durch an einer Stirnfläche des Resonatorraums ausserhalb der Entladungskanäle vorgesehene, einander zugekehrte Umlenkmittel in Reihe geschaltet sind, und bei dem an der anderen Stirnfläche vor dem einen Entladungskanal ein totalreflektierendes optisches Element sowie vor dem anderen ein zumindest teildurchlässiges optisches Element zum Auskoppeln der Strahlung angeordnet ist, und bei dem die beiden Lasereinheiten im Überlagerungsempfang kohärent betrieben werden, wobei sie einschliesslich ihrer optischen Elemente zueinander starr justiert sind.

Ein Laser dieser Art ist aus dem Fachaufsatz «Frequency and Amplitude Characteristics of a High Repetition Rate Hybrid TEA–$CO_2$ Laser» von J.L. Lachambre, P. Lavigne, M. Verreault und G. Otis, IEEE JOURNAL OF QUANTUM ELECTRONICS, Vol. QE-14, No. 3, vom März 1978, Seiten 170 bis 177, bekannt.

Aufgabe der Erfindung ist es, bei dem gattungsgemässen, mit zwei gleichen oder verschiedenen Wellenlängen arbeitenden Laser die Gleichmässigkeit der Temperaturverhältnisse und die Konstanz der Wellenlängenbeziehungen untereinander zu verbessern.

Diese Aufgabe wird erfindungsgemäss dadurch gelöst, dass die erste Lasereinheit eine von einer Kühlvorrichtung umgebene, einen getrennten Niederdruckraum umschliessende Röhre innerhalb eines im Gehäuse befindlichen Gasraums aufweist, der das Gas der zweiten Lasereinheit als Kühlmedium für die Wärmeabfuhr von der Kühlvorrichtung der ersten Lasereinheit enthält, und dass die zweite Lasereinheit mindestens einen mit dem Gasraum strömungsmässig verbundenen und zwei einander gegenüberliegende Elektroden aufweisenden Hochdruckraum aufweist. Durch diese Massnahmen wird für alle Wellenzüge eine zeitliche und räumliche Kohärenz erzwungen, so dass sich thermische und mechanische Änderungen gleichmässig auf alle Laser auswirken. Der Referenzlaser, Injektionslaser und Laser-Verstärker kann dabei in den verschiedenen Pulslaserkanälen gleichzeitig oder zeitlich verschieden zum Erzeugen eines Laserimpulses genutzt werden.

Eine Weiterbildung der Erfindung sieht vor, dass die Röhre der ersten Lasereinheit zentrisch im Resonatorraum angeordnet ist und an wenigstens zwei einander gegenüberliegenden Längsseiten an jeweils einen Hochdruckraum der zweiten Lasereinheit angrenzt. Je nach dem wo Strahlung ausgekoppelt werden soll, ist es hierbei erforderlich, dass vor den von den Elektroden gebildeten Entladungskanälen der zweiten Lasereinheit an der einen Stirnwand des Gehäuses Umlenkmittel und an der gegenüberliegenden Stirnwand entweder je ein teildurchlässiges optisches Element, oder ein teildurchlässiges und ein totalreflektierendes optisch es Element, oder je ein totalreflektierendes optisches Element angeordnet sind. Entsprechend muss dann vor der Röhre der ersten Lasereinheit entweder an einer Stirnwand des Gehäuses ein der Umlenkung und der Auskopplung dienendes Element und an der gegenüberliegenden ein totalreflektierendes optisches Element oder an einer Stirnwand ein totalreflektierendes optisches Element und an der gegenüberliegenden ein zumindest teildurchlässiges optisches Element oder an einer Stirnwand ein für mehrere Wellenlängen durchlässiges optisches Element und an der gegenüberliegenden ein der Umlenkung dienendes Element angeordnet sein. Solche Laser-Anordnungen sind vor allem für die Gasfernanalyse nach der Differentialmethode vorgesehen. So lässt sich aus den reflektierten Laseranteilen z.B. ermitteln, welche Gasanteile in der Luft vorhanden sind. Die Feuchtemessung oder der Einsatz als Anemometer, mit dem aufgrund des Dopplereffekts die Windgeschwindigkeit bestimmt wird, sind weitere Verwendungsmöglichkeiten.

Für vorstehende Anordnungen kann es dabei von Vorteil sein, wenn die die teildurchlässigen optischen Elemente enthaltende Stirnwand – z.B. mit Hilfe eines piezoelektrischen Wandlers – in Längsachsrichtung verstellbar ist. Auf diese Weise ist durch relativ kleine Verstellwege eine Abstimmung der Resonatorlänge möglich.

Die Glaslaser der ersten Lasereinheit können im CW-Betrieb oder im Pulsbetrieb arbeiten, wobei für ersteren ein Wave-guide-laser oder ein konventioneller Dauerstrichlaser in Frage kommt. Die Energieabgabe muss hier ständig, z.B. mittels einer Dauerentladung, erfolgen. Es versteht sich, dass bei einer solchen ohne Unterbrechung stattfindenden Auskopplung das Niveau entsprechend niederer liegt. In diesem Zusammenhang ist es von Vorteil, dass die beiden einander zugeordneten Lasereinheiten gleiche oder verschiedene, getrennt abstimmbare und zueinander feste Wellenlängen besitzen.

Es ist für die Funktion eines Hybridlasers von grundsätzlicher Bedeutung, ausgeglichene Temperaturen in den verschiedenen Lasern zu haben. Diesem Erfordernis wird einmal durch die Kühlrippen am Referenzlaser bzw. Injektionslaser bzw. Laser-Verstärker entsprochen. Zum anderen wird auch durch die Art der Integration beider Lasereinheiten in dem gemeinsamen Resonatorraum, d.h. durch die räumliche Verbindung des TE- bzw. gepulsten Lasers mit dem Resonatorraum die Möglichkeit geschaffen, das Gas dieses Lasers für die Wärmeabfuhr beim Referenzlaser, Injektionslaser oder Laser-Verstärker auszunutzen.

Die Kühlvorrichtung kann z.B. aus zum Entladungskanal in der Röhre senkrecht und untereinander parallel verlaufendem flächigen Material in Form von Kühlrippen, die von einem Kühlmedium umflossen sind, bestehen. Auch die Verwendung eines flüssig-gasförmigen Wärmetauschers (Heat-Pipe) ist denkbar. Da das Gas des TE- bzw. gepulsten Lasers, d.h. der zweiten Lasereinheit, an den Aussenwänden des anderen Lasers, d.h. der ersten Lasereinheit, entlangstreichen soll, ist in dem Resonatorraum bei höheren Pulsfolgefrequenzen ein Gebläse für die Gasumwälzung vorgesehen.

Eine Weiterbildung der Erfindung sieht vor, dass in den Strahlengang zwischen der ersten Lasereinheit und dem Umlenkmittel ein die von diesem Laser stammende Strahlung z.B. polarisationsabhängig – auskoppelndes Element und in der ausgekoppelten Strahlung ein selektiver Absorber oder Polarisator sowie ein wellenlängenabstimmbares – z.B. als Beugungsgitter ausgebildetes – optisches Element angeordnet sind.

Im folgenden werden an Hand einer Zeichnung, Ausführungsbeispiele der Erfindung näher erläutert, wobei die in den einzelnen Figuren einander entsprechenden Teile dieselben Bezugszahlen aufweisen. Es zeigt

Fig. 1 einen Längsschnitt durch einen erfindungsgemässen Hybridlaser,

Fig. 2 einen Schnitt AA durch den Laser gemäss Fig. 1,

Fig. 3 einen Anwendungsfall eines mit einem Absorber ausgerüsteten Lasers gemäss den Fig. 1 und 2,

Fig. 4 einen Längsschnitt durch einen Hybridlaser symmetrischer Bauform,

Fig. 5 einen Querschnitt BB durch den Laser gemäss Fig. 4,

Fig. 6 eine Variante des Lasers gemäss Fig. 4 und 5,

Fig. 7 einen möglichen Querschnitt des Lasers gemäss Fig. 6 mit einem vierfach gefaltetem Strahlengang des Gaslasers und

Fig. 8 eine weitere Variante des Lasers gemäss Fig. 4 und 5.

Der Hybridlaser 1 setzt sich aus zwei in einem gemeinsamen Gehäuse 2 mit gemeinsamen Resonatorraum 3 untergebrachten Lasereinheiten 4 und 5 zusammen. Die erste Lasereinheit 4 ist ein in CW- oder Pulsbetrieb arbeitender Referenzlaser, Injektionslaser oder Laser-Verstärker, der als Wave-guide-laser ( = Wellenleiterlaser) oder Dauerstrichlaser ausgebildet sein kann. Er wird z.B. als Messlaser zur Frequenzabstimmung des Resonators oder gleichzeitig als lokaler Oszillator verwendet. Die Lasereinheit 5 dagegen ist ein TE- oder ein longitudinal gepulster oder ein gütegeschalteter CW-Laser mit Q-switch, der der Erzeugung eines Laserimpulses dient.

Die konstruktive Ausführung besteht aus der unter Niederdruck stehenden Röhre 6, in der – z.B. über eine dauernd brennende Entladung – eine fortlaufende Anregung des Lasers stattfindet. Sie ist beidenends schocksicher an den zu ihrer Längsachse senkrecht verlaufenden Halterungen 16 und 17 befestigt. Ihre abgeschrägten Enden sind mit je einem Brewster-Fenster 7 bzw. 8 und die Halterungen in entsprechender Höhe mit je einer Öffnung 19 bzw. 20 versehen. Die Röhre selbst ist von zu ihr senkrecht verlaufenden, flächigen Kühlrippen 9 umgeben. Bei einem anderen, zeichnerisch nicht dargestellten Ausführungsbeispiel ist als Kühlmittel auch eine sogenannte Heat-Pipe denkbar. Hierbei handelt es sich um ein in einer Röhre fliessendes Medium, das über die Seitenwände der Röhre verdampft und anschliessend in abgekühltem, flüssigen Aggregatzustand der Röhre wieder zugeleitet wird.

Die durch das Fenster 7 austretende Strahlung gelangt der Reihe nach auf die unter 45° an der Stirnwand 10 des Gehäuses 2 befestigten Spiegel 12 und 13, die die Strahlung um zweimal 90° in den Strahlengang der Lasereinheit 5 umlenken, dem in den Halterungen 16 und 17 ebenfalls beidenends je eine Öffnung 20 und 22 gegenüberliegt. Die von der Lasereinheit 5 ausgehende Strahlung gelangt auf demselben Weg, in umgekehrter Richtung, auch in den Strahlengang der ersten Lasereinheit 4.

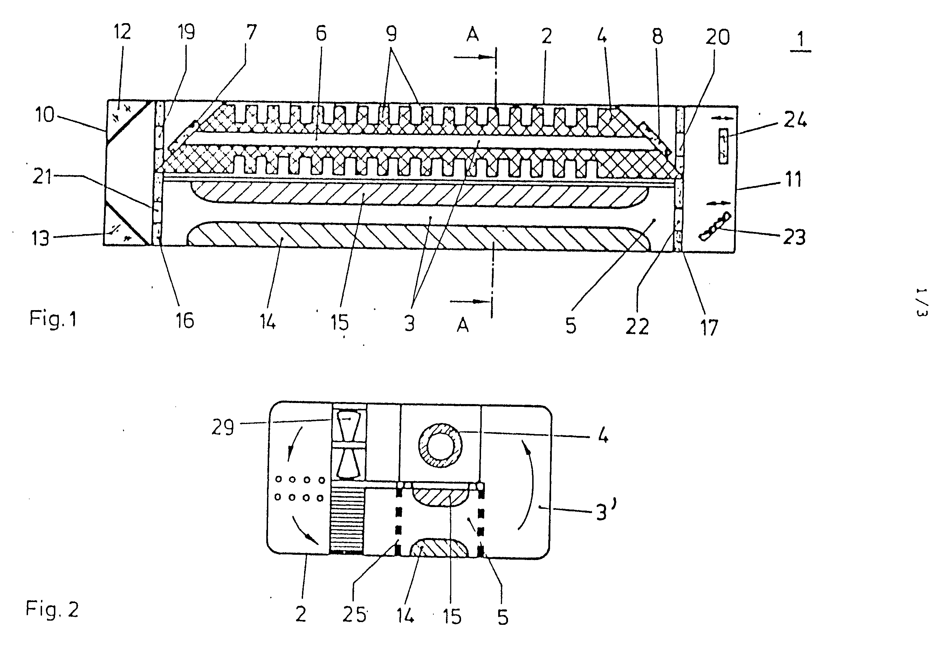

Die bei geänderter Gasumwälzung z.B. auch als Semi-wave-guide-laser – zeichnerisch nicht dargestellt – ausgeführte zweite Lasereinheit 5 besteht im wesentlichen aus den beiden einander gegenüberliegenden Elektroden 14 und 15. Ihr Innenraum ist über Ausnehmungen 25 (Fig. 2) mit dem Gasraum 3 verbunden, so dass in beiden Räumen dieselben Druckverhältnisse herrschen. Das Gebläse 29 sorgt dafür, dass das Gas durch die Ausnehmungen hindurch und entlang der Kühlrippen – wie durch die Pfeile angedeutet – zirkuliert, so dass in beiden Lasereinheiten gleiche Temperaturverhältnisse herrschen.

An der innenseitigen Stirnwand 11 sind in Höhe der Öffnung 22 (Fig. 1) das totalreflektierende optische Element 23, z.B. ein Spiegel, und in Höhe der Öffnung 20 das wenigstens teildurchlässige und der Auskopplung dienende optische Element 24, das z.B. ein entsprechend ausgebildeter Spiegel sein kann, befestigt.

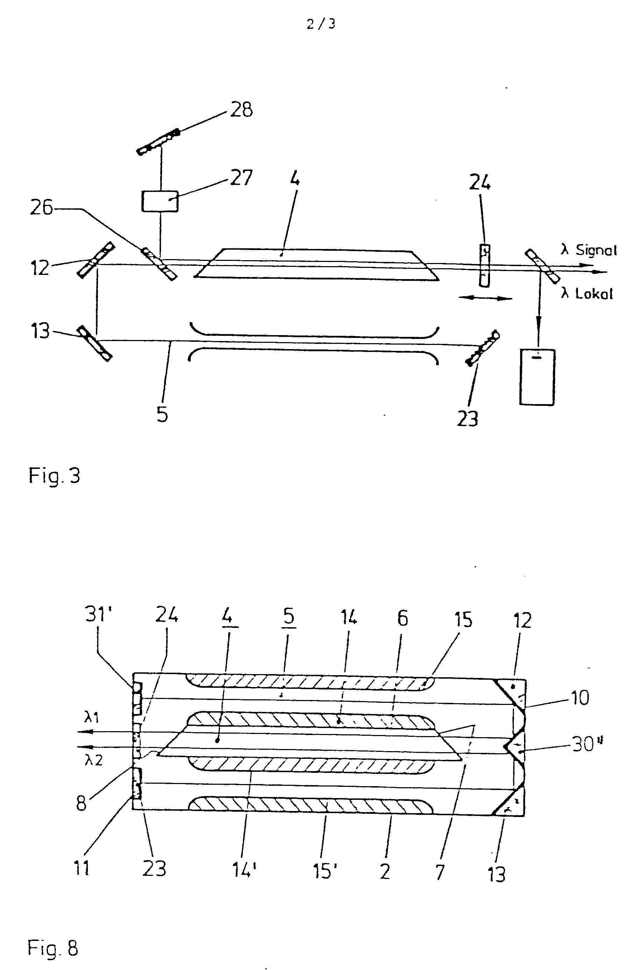

Bei dem Ausführungsbeispiel gemäss Fig. 3 ist in den Strahlengang zwischen die erste Lasereinheit 4 und den Umlenkspiegel 12 das die Strahlung dieser Lasereinheit auskoppelnde Element 26 geschaltet. Es lenkt die Strahlung über den Absorber oder Polarisator 27 auf das totalreflektierende optische Element 28, z.B. ebenfalls einen Spiegel, und von dort wieder zurück in den Hauptstrahlengang.

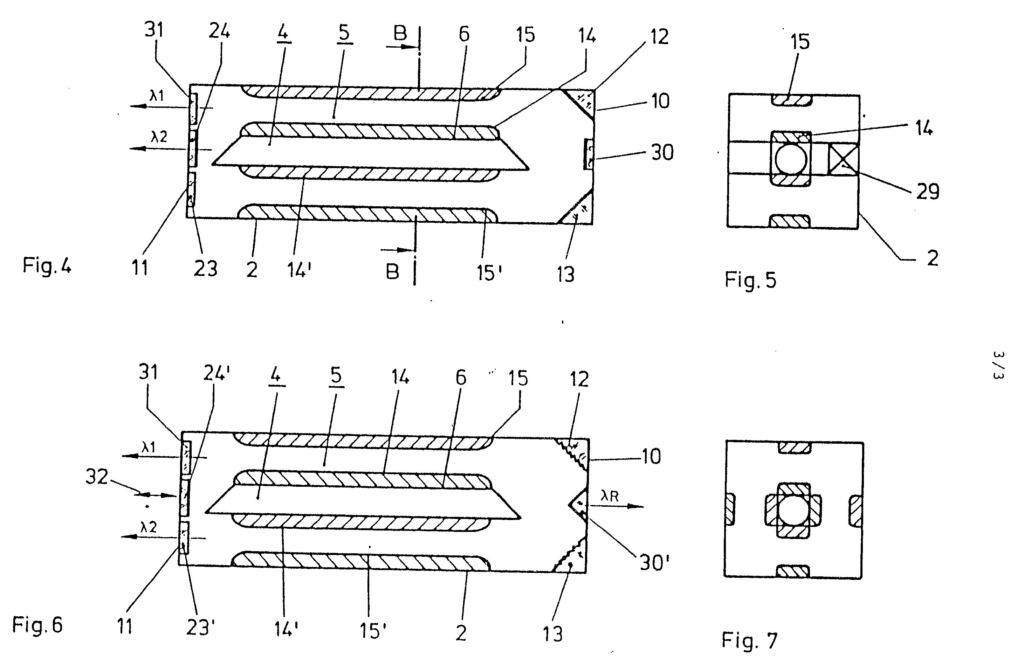

Die Ausführungsbeispiele gemäss den Fig. 4 bis 7 unterscheiden sich von den vorausgehenden im wesentlichen durch die zentrische Anordnung der Lasereinheit 4. An ihrer – in Blickrichtung gesehen – oberen und unteren Seite ist je ein Elektrodenpaar 14, 15 bzw. 14′, 15′ befestigt. Diese Konzeption macht auch eine etwas geänderte Anordnung der auskoppelnden, reflektierenden und umlenkenden Elemente erforderlich: So sind im Fall der Fig. 4 vor den Elektrodenkanälen an der Stirnwand 10 die beiden Umlenkspiegel 12 und 13 und an der Stirnwand 11 das für

die Wellenlängen $\lambda_1$ durchlässigen Fenster 31 und der totalreflektierende Spiegel 23 angeordnet. Vor dem optischen Kanal der Röhre 6 dagegen ist an der Stirnwand 10 das totalreflektierende optische Element 30, z.B. ein Spiegel, und an der Stirnwand 11 ein für die Wellenlänge $\lambda_2$ durchlässiger Spiegel 24 angeordnet. Die Elemente 23 und 24 oder 30 und 31 können abstimmbar ausgebildet sein. Im Fall der Fig. 6 ist in der Stirnwand 11 der totalreflektierende Spiegel 23 durch das für die Wellenlänge $\lambda_3$ durchlässige Fenster 23' sowie der durchlässige Spiegel 24 durch ein total reflektierendes optisches Element 24' und in der Stirnwand 10 der totalreflektierende Spiegel 30 durch die Strahlung teils um 90° nach 12 und 13 umlenkende, teils sie – für die Wellenlänge $\lambda_R$ – auskoppelnde Element 30' ersetzt. Mit der Bezugszahl 32 ist ein piezoelektrischer Wandler bezeichnet, mit dem die Stirnwand 11 im Bedarfsfall in Längsrichtung verstellt werden kann.

Fig. 7 zeigt einen möglichen Querschnitt des Ausführungsbeispiels gemäss Fig. 6, bei dem der Strahlengang der zweiten Lasereinheit vierfach gefaltet ist. Selbstverständlich ist bedarfsweise auch noch eine weitergehende, in der Zeichnung allerdings nicht näher dargestellte Faltung dieses Strahlengangs möglich, ohne dadurch den Rahmen der Erfindung zu verlassen.

Schliesslich ist in Fig. 8 noch die Möglichkeit aufgezeigt, dass – wie bisher – in der Röhre 6 injizierte Strahlung über die Umlenkmittel 30 und 12 bzw. 13 in die von den Elektroden 14, 15 bzw. 14', 15' gebildeten Kanäle gelangt; zusammen mit der dort erzeugten Strahlung wird die gesamte Strahlung jetzt aber an den totalreflektierenden Spiegeln 23 bzw. 31' in umgekehrter Richtung durch die Röhre 6 hindurch und durch das in der Stirnwand 11 eingelassene sowie für die Wellenlänge $\lambda_1$ und $\lambda_2$ durchlässige Fenster 24 nach aussen reflektiert. Die Stirnseiten der Röhre sind beiderseits wieder von je einem Brewster-Fenster 7 bzw. 8 begrenzt.

**Patentansprüche**

1. Hybridlaser, bestehend aus einer ersten Lasereinheit (4), die ein Referenzlaser oder ein Injektionslaser oder ein Laser-Verstärker sein kann, und aus einer zweiten Lasereinheit (5), die ein TE-Laser (transversal exited laser) oder ein longitudinal gepulster oder gütegeschalteter CW-Laser (continuous wave laser) sein kann, bei dem beide Lasereinheiten in einem gemeinsamen Gehäuse (2) und in einem gemeinsamen Resonatorraum (3) zueinander parallel verlaufend angeordnet sind und mit gleicher oder unterschiedlicher Wellenlänge arbeiten, wobei ihre Entladungskanäle durch an einer Stirnfläche des Resonatorraums ausserhalb der Entladungskanäle vorgesehene, einander zugekehrte Umlenkmittel (12, 13) in Reihe geschaltet sind, und bei dem an der anderen Stirnfläche vor dem einen Entladungskanal ein totalreflektierendes optisches Element (23) sowie vor dem anderen ein zumindest teildurchlässiges optisches Element (24) zum Auskoppeln der Strahlung angeordnet ist, und bei dem die beiden Lasereinheiten im Überlagerungsempfang kohärent betrieben werden, wobei sie einschliesslich ihrer optischen Elemente zueinander starr justiert sind, dadurch gekennzeichnet, dass die erste Lasereinheit (4) eine von einer Kühlvorrichtung (9) umgebene, einen getrennten Niederdruckraum umschliessende Röhre (6) innerhalb eines im Gehäuse befindlichen Gasraums (3') aufweist, der das Gas der zweiten Lasereinheit (5) als Kühlmedium für die Wärmeabfuhr von der Kühlvorrichtung (9) der ersten Lasereinheit (4) enthält, und dass die zweite Lasereinheit (5) mindestens einen mit dem Gasraum (3') strömungsmässig verbundenen und zwei einander gegenüberliegende Elektroden (14; 15) aufweisenden Hochdruckraum aufweist.

2. Hybridlaser nach Anspruch 1, dadurch gekennzeichnet, dass die Röhre (6) der ersten Lasereinheit (4) zentrisch im Resonatorraum (3) angeordnet ist und an wenigstens zwei einander gegenüberliegenden Längsseiten an jeweils einen Hochdruckraum der zweiten Lasereinheit (5) angrenzt.

3. Hybridlaser nach Anspruch 2, dadurch gekennzeichnet, dass vor den von den Elektroden (14; 15 bzw. 14', 15') gebildeten Entladungskanälen der zweiten Lasereinheit an der einen Stirnwand (10) des Gehäuses Umlenkmittel (12; 13) und an der gegenüberliegenden Stirnwand (11) entweder je ein teildurchlässiges optisches Element (31, 23' in Fig. 6) oder ein teildurchlässiges und ein totalreflektierendes optisches Element (31 bzw. 23 in Fig. 4), oder je ein totalreflektierendes optisches Element (31'; 23 in Fig. 8) angeordnet sind.

4. Hybridlaser nach Anspruch 2 oder 3, dadurch gekennzeichnet, dass vor der Röhre (6) der ersten Lasereinheit entweder an einer Stirnwand (10) des Gehäuses ein der Umlenkung und der Auskopplung dienendes Element (30') und an der gegenüberliegenden (11) ein totalreflektierendes optisches Element (24' in Fig. 6) oder an einer Stirnwand (10) ein totalreflektierendes optisches Element (30) und an der gegenüberliegenden (11) ein zumindest teildurchlässiges optisches Element (24 in Fig. 4) oder an einer Stirnwand (11) ein für mehrere Wellenlängen durchlässiges optisches Element (24) und an der gegenüberliegenden (10) ein der Umlenkung dienendes Element (30'') angeordnet sind.

5. Hybridlaser nach Anspruch 1 oder einem der folgenden Ansprüche, dadurch gekennzeichnet, dass die die teildurchlässigen optischen Elemente (24; 31 bzw. 23'; 31) enthaltende Stirnwand (11) in Längsachsrichtung verstellbar ist (Fig. 6).

6. Hybridlaser nach Anspruch 5, dadurch gekennzeichnet, dass die in Längsrichtung verstellbare Stirnwand (11) mit Hilfe eines piezoelektrischen Wandlers (32) verstellbar ist (Fig. 6).

7. Hybridlaser nach Anspruch 1 oder einem der folgenden Ansprüche, dadurch gekennzeichnet, dass die beiden einander zugeordneten Lasereinheiten (4; 5) gleiche oder verschiedene, getrennt abstimmbare und zueinander feste Wellenlängen besitzen.

8. Hybridlaser nach Anspruch 1 oder einem der folgenden Ansprüche, dadurch gekennzeichnet, dass eine im CW-(=continuous wave-) Betrieb oder im Pulsbetrieb arbeitende erste Lasereinheit (4) Verwendung findet.

9. Hybridlaser nach Anspruch 8, dadurch gekennzeichnet, dass der CW-Laser der ersten Lasereinheit (4) ein Wave-guide-Laser (=Wellenleiterlaser) oder ein konventioneller Dauerstrichlaser ist.

10. Hybridlaser nach Anspruch 1 oder einem der folgenden Ansprüche, dadurch gekennzeichnet, dass als Kühlvorrichtung aus zum Entladungskanal in der Röhre (6) senkrecht und untereinander parallel verlaufendem flächigen Material bestehende sowie vom Kühlmedium umflossene Kühlrippen (9) Verwendung finden (Fig. 1).

11. Hybridlaser nach Anspruch 1 oder einem der folgenden Ansprüche, dadurch gekennzeichnet, dass als Kühlvorrichtung flüssiggasförmige Wärmetauscher (Heat-Pipes) vorgesehen sind.

12. Hybridlaser nach Anspruch 1 oder einem der folgenden Ansprüche, dadurch gekennzeichnet, dass in den Resonatorraum (3) ein Gebläse (29) zur Umwälzung des Gases der zweiten Lasereinheit eingebaut ist (Fig. 2 und 5).

13. Hybridlaser nach Anspruch 1 oder einem der folgenden Ansprüche, dadurch gekennzeichnet, dass in dem Strahlengang zwischen der ersten Lasereinheit (4) und dem Umlenkmittel (12) ein die Strahlung – z.B. polarisationsabhängig – auskoppelndes Element (26) und in der ausgekoppelten Strahlung ein selektiver Absorber oder Polarisator (27) sowie ein wellenlängenabstimmbares – z.B. als Beugungsgitter ausgebildetes – optisches Element (28) angeordnet sind (Fig. 3).

**Revendications**

1. Laser hybride constitué d'un premier ensemble laser (4), qui peut être un laser de référence ou un laser à injection, ou un amplificateur laser, et d'un deuxième ensemble laser (5) qui peut être un laser TE (laser à excitation transversale) ou un laser à impulsion longitudinale ou un laser CW (laser à onde continue) ou un laser à montage Q, dans lequel les ensembles laser sont disposés parallèlement entre eux dans un boitier commun (2) et dans un espace résonateur commun (3), et travaillent avec la même longueur d'onde ou avec des longueurs d'onde différentes, leurs canaux de déchargement étant montés en série par des organes de déviation (12, 13) orientés l'un vers l'autre, prévus sur une surface frontale de l'espace résonatuer en dehors des canaux de décharge, et dans lequel un élément optique totalement réfléchissant (23) est disposé sur l'autre surface frontale devant l'un des canaux de décharge et un élément optique (24) au moins partiellement transparent pour le déclenchement du rayon est disposé devant l'autre surface frontale, et dans lequel les deux ensembles laser sont commandés de façon cohérente en réception superposée, et sont ajustés rigidement entre eux, y compris leurs éléments optiques, caractérisé en ce que le premier ensemble laser (4) présente à l'intérieur d'une volume de gaz (3') se trouvant dans le boitier un tube (6) entourant un espace à basse pression séparé, et entouré par un dispositif de refroidissement (9), ce tube contenant le gaz du deuxième ensemble laser (5) comme agent de refroidissement pour l'évacuation de la chaleur du dispositif de refroidissement (9) du premier ensemble laser, et en ce que le deuxième ensemble laser (5) présente au moins un espace haute pression connecté en sens de l'écoulement avec le volume de gaz (3') et présentant deux électrodes (14, 15) en opposition.

2. Laser hybride selon la revendication 1, caractérisé en ce que le tube (6) du premier ensemble laser (4) est disposé centralement dans l'espace résonateur (3) et jouxte au moins deux côtés longitudinaux superposés, à chacun des espaces haute pression du deuxième ensemble laser (5).

3. Laser hybride selon la revendication 2, caractérisé en ce que, devant les canaux de décharge, formés par les électrodes (14, 15 ou 14', 15'), du deuxième ensemble laser, des organes de déviation (12, 13) sont disposés contre l'une (10) des parois frontales du boitier, et contre la paroi frontale opposée (11) sont disposés soit un élément optique partiellement transparent (31, 23'), soit un élément optique totalement réfléchissant et un élément optique partiellement transparent (23, 31), soit un élément optique totalement réfléchissant (31', 23).

4. Laser hybride selon une des revendications 2 ou 3, caractérisé en ce que devant le tube (6) du premier ensemble laser sont disposés, soit contre une paroi frontale (10) du boitier un élément (30') servant à la déviation et au déclenchement, et contre la paroi opposée (11) un élément optique totalement réfléchissant (24'), soit contre une paroi frontale (10) un élément optique (30) totalement réfléchissant et contre la paroi opposée (11) un élément optique (24) au moins partiellement transparent, soit contre une paroi frontale (11) un élément optique (24) transparent pour plusieurs longueurs d'onde et contre la paroi opposée (10) un élément (30'') servant à la déviation.

5. Laser hybride selon une des revendications précédentes, caractérisé en ce que la paroi frontale (11) contenant les éléments optiques partiellement transparents est déplaçable en direction de l'axe longitudinal.

6. Laser hybride selon la revendication 5, caractérisé en ce que la paroi (11) déplaçable en direction longitudinale est déplaçable à l'aide d'un transducteur piézoélectrique.

7. Laser hybride selon une des revendications précédentes, caractérisé en ce que les deux ensembles laser (4, 5) disposés en regard possèdent des longueurs d'onde identiques ou différentes, accordables séparément et fixes l'une par rapport à l'autre.

8. Laser hybride selon une des revendications précédentes, caractérisé en ce qu'un premier ensemble laser (4) travaillant en mode CW (onde continue) ou en mode par impulsions est mis en application.

9. Laser hybride selon la revendication 8, caractérisé en ce que le laser CW du premier ensemble laser (4) est un laser à guide d'onde ou un laser classique continu.

10. Laser hybride selon une des revendications précédentes, caractérisé en ce que l'on utilise comme dispositif de refroidissement, des nervures réfrigérantes (9) parallèles entre elles, constituées par un matériau plat, perpendiculaires au canal de décharge dans le tube (6) et arrosées par l'agent de refroidissement.

11. Laser hybride selon une des revendications précédentes, caractérisé en ce que des échangeurs de chaleur liquidegaz sont prévus comme dispositif de refroidissement.

12. Laser hybride selon une des revendications précédentes, caractérisé en ce qu'un ventilateur (29) est incorporé dans l'espace résonateur (3) pour la circulation des gaz du deuxième ensemble laser.

13. Laser hybride selon une des revendications précédentes, caractérisé en ce que sur le trajet du rayonnement entre le premier ensemble laser (4) et l'organe de déviation (12) est disposé un élément (26) déclenchant le rayonnement, par exemple en fonction de la polarisation, et dans le rayonnement déclenché, est disposé un absorbeur sélectif ou un polariseur (27) ainsi qu'un élément optique (28) accordable en longueur d'onde, formé par exemple par un réseau de diffraction.

**Claims**

1. A hybrid laser comprising a first laser unit (4) which may be a reference laser or an injection laser or a laser amplifier, and a second laser unit (5) which may be a TE laser (transversely excited laser) or a longitudinally pulsed or Q-switched CW laser (continuous wave laser), wherein the two laser units are arranged parallel to each other in a common housing (2) and in a common resonator chamber (3) and operate with the same or a different wavelength, their discharge channels being connected in series through deflecting means (12, 13) facing each other at one end face of the resonator chamber outside the discharge channels, and wherein a totally reflective optical element (23) is arranged at the other end face in front of one discharge channel and an at least partially transparent optical element (24) is arranged in front of the other discharge channel to output the beam, and wherein the two laser units are operated coherently in heterodyne reception, the two units including their optical elements being rigidly adjusted in relation ot each other, characterised in that the first laser unit (4) comprises a tube (6) surrounded by a cooling device (9) and enclosing a separate low pressure chamber inside a gas chamber (3') situated in the housing, which gas chamber contains the gas of the second laser unit (5) as cooling medium for the removal of heat from the cooling device (9) of the first laser unit (4), and in that the second laser unit (5) comprises at least one high pressure chamber communicating with the gas chamber (3') to enable gas to flow between them and having two electrodes (14; 15) situated opposite each other.

2. A hybrid laser according to claim 1, characterised in that the tube (6) of the first laser unit (4) is placed centrally in the resonator chamber (3) and borders, at least along two of its opposite longitudinal sides, on a high pressure chamber of the second laser unit (5).

3. A hybrid laser according to claim 2, characterised in that at one end face (10) of the housing, deflecting means (12, 13) are provided in front of the discharge channels of the second laser unit formed by the electrodes (14; 15 and 14', 15') while at the opposite end face (11) there are arranged either a partially transparent optical element (31, 23' in Fig. 6) in front of each channel or a partially transparent and a totally reflective optical element (31 and 23 in Fig. 4), one for each channel, or a totally reflective optical element (31', 23 in Fig. 8) in front of each channel.

4. A hybrid laser according to claim 2 or claim 3, characterised in that, in front of the tube (6) of the first laser unit, there are arranged either an element (30') for deflection and uncoupling at one end face (10) of the housing and a totally reflective optical element (24' in Fig. 6) at the opposite end face (11) or a totally reflective optical element (30) at one end face (10) and an at least partially transparent optical element (24 in Fig. 4) at the opposite end face (11) or an optical element (24) which is transparent for several wavelengths at one end face (11) and an element (30") for deflection at the opposite end face (10).

5. A hybrid laser according to claim 1 or one of the following claims, characterised in that the end face (11) containing the partly transparent optical elements (24; 31 or 23'; 31) is displaceable in the direction of the longitudinal axis (Fig. 6).

6. A hybrid laser according to claim 5, characterised in that the end face (11) which is displaceable in the longitudinal direction is displaceable by means of a piezoelectric transducer (32) (Fig. 6).

7. A hybrid laser according to claim 1 or one of the following claims, characterised in that the two associated laser units (4; 5) have equal or different wavelengths which can be adjusted separately and are fixed in their relation to each other.

8. A hybrid laser according to claim 1 or one of the following claims, characterised in that a first laser unit (4) operating in the CW (continuous wave) mode or in the pulse mode is used.

9. A hybrid laser according to claim 8, characterised in that the CW laser of the first laser unit (4) is a waveguide laser or a conventional continuous wave laser.

10. A hybrid laser according to claim 1 or one of the following claims, characterised in that the cooling device comprises cooling ribs (9) of a flat material arranged parallel to each other and perpendicular to the discharge channel in the tube (6) and such that the cooling medium flows around them (Fig. 1).

11. A hybrid laser according to claim 1 or one of the following claims, characterised in that the cooling device comprises liquid-gaseous heat exchangers (heat pipes).

12. A hybrid laser according to claim 1 or one of the following claims, characterised in that a fan (29) for circulating the gas of the second laser unit is installed in the resonator chamber (3) (Figs. 2 and 5).

13. A hybrid laser according to claim 1 or one of the following claims, characterised in that an element (26) outputting the beam, e.g. depending upon polarization, is arranged in the path of the beam between the first laser unit (4) and the deflecting means (12) and a selective absorber or polarizer (27) as well as a wavelength adjustable optical element (28), e.g. in the form of a diffraction grating, are arranged in the outputted beam (Fig. 3).

Fig.1

Fig. 2

Fig. 3

Fig. 8

Fig. 4

Fig. 5

Fig. 6

Fig. 7

0 048 714

3 / 3